Europäisches Patentamt

European Patent Office

Office européen des brevets

(11) Veröffentlichungsnummer: **0 183 639 B1**

(12) **EUROPÄISCHE PATENTSCHRIFT**

(45) Veröffentlichungstag der Patentschrift: 03.10.90

(51) Int. Cl.⁵: **A 01 G 1/00, C 09 K 17/00**

(21) Anmeldenummer: 85730146.9

(22) Anmeldetag: 23.10.85

(54) Vegetationsschicht aus mineralischem Gemenge.

(30) Priorität: 26.10.84 DE 3439224

(43) Veröffentlichungstag der Anmeldung:
04.06.86 Patentblatt 86/23

(45) Bekanntmachung des Hinweises auf die
Patenterteilung:
03.10.90 Patentblatt 90/40

(84) Benannte Vertragsstaaten:
AT BE CH DE FR GB IT LI LU NL SE

(56) Entgegenhaltungen:
EP-A-0 038 234
EP-A-0 046 855
DE-A-3 002 882
DE-B-2 234 947
FR-A-1 234 814
FR-A-2 512 046
US-A-2 917 395
US-A-3 938 279
US-A-4 343 751
US-A-4 402 891
US-A-4 472 086

(73) Patentinhaber: Erich Friedrich Metalle-
Hüttenprodukte GmbH & Co KG
Seesener Strasse 137
D-3320 Salzgitter 41 (DE)

(72) Erfinder: Friedrich, Helmut
Flurenstrasse 84
D-3320 Salzgitter 41 (DE)

(74) Vertreter: Thömen, Uwe, Dipl.-Ing.
Patentanwalt U. Thömen Zeppelinstrasse 5
D-3000 Hannover 1 (DE)

Courier Press, Leamington Spa, England.

**Beschreibung**

Die Erfindung betrifft eine Vegetationsschicht gemäß dem oberbegriff des Patentanspruchs 1.

Es sind bereits Vegetationsschichten für krautige Vegetationen bekannt, wobei hier vor allem die üblichen Rasenflächen zu nennen sind. Mit zunehmendem Umweltbewußtsein und der gewachsenen Erkenntnis der ökologischen Bedeutung von Grünflächen insbesondere in Städten sowie schließlich aus rein optischen Gründen und aus städtebaulicher Sicht ist den Rasenflächen eine erhebliche Bedeutung zuzuschreiben.

Von den vielen günstigen Eigenschaften der Rasenflächen seien beispielhaft die erzeilbare Klima- und Luftverbesserung genannt. Ferner ist die Eigenschaft zu erwähnen, daß der Rasen Feuchtigkeit bzw. Wasser hält und somit zur Entlastung der Kanalisation beitragen kann. Schließlich ist noch auf das allgemeine Bedürfnis nach mehr Grün in den Städten bzw. nach mehr Freiflächen hinzuweisen.

Angesichts der geschilderten positiven Merkmale gibt es schon Bestrebungen, die Vegetationsschichten für Rasen derart zu gestalten und auszubilden, daß neben der bisherigen Anwendung neue Verwendungszwecke für Rasenflächen möglich werden, um dem Wunsch nach mehr Grünflächen entgegenzukommen. Diesem Bestreben sind in der Praxis allerdings Grenzen gesetzt.

Es muß nämlich berücksichtigt werden, daß die bekannten Vegetationsschichten einen relativ weichen Untergrund bilden, der zwar unter dem biologischen Gesichtspunkt einer Vegetationsschicht für Rasen durchaus erwünscht ist, der aber neuen zusätzlichen Anwendungsgebieten einer Rasenfläche hindernd im Wege steht.

Ein zusätzliches Anwendungsgebiet eines Rasens ist beispielsweise die Verwendung von großflächigen Parkplätzen, wie sie etwa bei Großveranstaltungen, wie Messen usw., benötigt werden. Pier hat man sich bisher häufig notgedrungen damit beholfen, Wiesen als Parkraum zur Verfügung zu stellen. Es ist jedoch ohne weiteres ersichtlich, daß sich hier wegen des weichen Untergrundes erhebliche Probleme einstellen können.

Abgesehen von der Beschädigung der Rasenfläche selbst ist die Parkmöglichkeit äußerst unsicher, da vor allem schwere Fahrzeuge in den Boden einsinken werden.

Als ein weiteres Beispiel für eine bisher unbefriedigende Anwendung für Rasenflächen sind die Seiten- bwz. Randstreifen (Bankett) bei Straßen und Autobahnen zu nennen, wobei auch die Mittelstreifen zwischen den Fahrbahnen zu erwähnen sind. Hier birgt die weiche Vegetationsschicht bzw. die Rasenfläche eine erhebliche Gefahr in sich, wenn ein Fahrzeug von der Straßenfahrbahn abkommt. Ein entscheidender Nachteil der bekannten Vegetationsschichten liegt also in ihrer geringen Festigkeit.

Um den beschriebenen Nachteilen entgegenzutreten sind in der Praxis schonsogenannte Rasen- bzw. Gittersteine eingesetzt worden, welche einen festen Untergrund schaffen sollen. Die Gittersteine werden auf dem Untergrundboden verlegt und besitzen längs ihrer Oberfläche mehrere im Abstand voneinander angeordnete senkrecht verlaufende Öffnungen, die mit Boden verfüllt werden. Im Bereich dieser Öffnungen kann also durchaus Rasen oder dergleichen wachsen.

Wegen der durch die Verfestigung der Gittersteine erzielbaren Festigkeit lassen sich grundsätzlich sichere Verkehrsflächen wie Parkplätze, Randstreifen oder auch Wanderwege gestalten. Beim Befahren mit einem Fahrzeug kann nämlich durch das infolge der Öffnungen gebildete Gesteingerippe ein Druckausgleich erfolgen, so daß die Gefahr des Einsinkens nicht mehr besteht. Allerdings ist die Verwendung der Gittersteine mit erheblichen Nachteilen behaftet.

Als unbefriedigend ist zunächst unter optischen Gesichtspunkten der Umstand hervorzuheben, daß sich bei Anwendung der Gittersteine keine geschlossene Grünfläche erzielen läßt. Da der Rasen nur im Bereich der im Abstand voneinander befindlichen Öffnungen wachsen kann, die eine "Verbindung" zu dem unteren Boden schaffen, entsteht sozusagen ein fleckiger unschöner Eindruck. Der allgemeine Wunsch nach Grünflächen kann in dieser Weise nicht befriedigt werden. Vielmehr wirktdie fleckenförmige Begrünung auf einer durch Gittersteine gebildeten Oberfläche eher störend.

Weiterhin ist der Einsatz der Gittersteine auch unter wirtschaftlichen Gesichtspunkten als nachteilig einzustufen. Die Herstellungskosten — sowie die erforderlichen Arbeiten für das Verlegen der Gittersteine — sind erheblich, so daß aus Gründen der erforderlichen Finanzierung häufig darauf verzichtet werden muß, an sich gewünschte Verkehrsflächen mit Rasen zu erstellen. Andererseits besteht aber wie gesagt ein erhebliches Bedürfnis nach befestigten Verkehrsflächen, und wenn man hier etwa an die Rand- und Mittelstreifen bei Straßen denkt, wird deutlich, wie groß (von der qm-Zahl her) allein beim Straßenneubau der Bedarf ist.

Durch die US-A-4 402 891 ist ein Verfahren zur Herstellung und Rekonditionierung von Zementstaub bekannt. Dabei besteht die Zielsetzung darin, Zementstaubabfälle als Zuschlagstoff für den Erdboden zu verwenden.

Der Einsatz von Zement als Zuschlag bewirkt eine sofortige Verfestigung des Bodens, ohne daß Poren entstehen. Im übrigen besitzt der Zement einen pH-Wert von etwa 14, so daß die Verwendung von Zement als Zuschlagstoff insgesamt Pflanzenvernichtend ist und keine Begrünung ermöglicht.

Somit erlaubt der Stand der Technik gemäß der US-A-4 402 891 zwar eine gute Verfestigung des Bodens, jedoch mit dem Nachteil, daß ein Pflanzenwachstum nicht erfolgen kann. Im übrigen ist zu berücksichtigen, daß die Böden, bei denen der bekannte Zementstaub als Zuschlagstoff zur Anwendung gebracht werden soll, nicht immer von gleicher Beschaffenheit sind, sondern vielmehr in der Regel unterschiedliche Eigenschaften aufweisen. Deshalb unterliegt die angestrebte verfestigende Wirkung des Zementstaubs als Zuschlagsstoff nicht vorhersehbaren Schwankungen.

Der Erfindung liegt die Aufgabe zugrunde, eine Vegetationsschicht der im Oberbegriff des Patentanspruchs 1 genannten Art zu schaffen, die so verfestigt ist, daß sie einerseits als Verkehrsfläche Anwendung finden kann, daß aber andererseits der Rasenbewuchs durch die Verfestigung nicht beeinträchtigt werden soll. Im Vordergrund steht also die Schaffung einer verfestigten Verkehrsfläche, die trotz der Verfestigung mit einer Vegetation begrünbar ist.

Dieses Ziel erreicht die Erfindung bei der im Oberbegriff des Patentanspruchs 1 genannten Vegetationsschicht durch die Merkmale des kennzeichnenden Teils des Patentanspruchs 1.

Die erfindungsgemäße Vegetationsschicht aus mineralischem Gemenge läßt sich ohne Probleme auf Böden unterschiedlicher Beschaffenheit und Qualität aufbringen, d.h., es besteht eine Unabhängigkeit vom Unterboden. Die neuartige Vegetationsschicht kann mit stets der gleichen Beschaffenheit hergestellt und auf einen beliebigen Unterboden aufgebracht werden.

Ein entscheidender Aspekt der Erfindung besteht darin, da8 ein durch Kalkausscheidungen sich selbst verfestigendes Gemenge für die Vegetationsschicht geschaffen wird.

Die von den Zuschlägen herrührenden Salze und vor allem der Kalk bewirken sozusagen eine Selbstverstärkung des Gemenges bzw. der Vegetatonsschicht, die aufgrund der dadurch erzielten Stabilität in der Lage ist, als befestigte Verkehrsfläche bei gleichzeitigem Bewuchs zu dienen.

Die einzelnen Mischungsbestandteile des mineralischen Gemenges verbacken bei der Erfindung derart untereinander, daß auch bei großen Belastungen — etwa der Druck eines Rades beim Befahren der Vegetationsschicht mit einem schweren Kraftfahrzeug — keine Verschiebung und Nachverdichtung erfolgen. In einer zweckmäßigen Ausgestaltung der Erfindung wird der Luftanteil im Porengefüge des mineralischen Gemenges mit mindestens 15 Volumen-Prozenten gewählt, so daß trotz der Verfestigung ein ausreichender Pflanzenbewuchs, z.B. Rasen, möglich ist. Die Vegetationsschicht bleibt also trotz der hohen Verfestigung und der mechanischen Stabilität in biologischer Hinsicht funktionsfähig. Durch die Auswahl der Pflanzenarten und die biochemischen Eigenschaften des mineralischen Gemenges kann darüberhinaus eine hohe Tausalzverträglichkeit durch Tausalzkompensation gewährleistet werden.

Durch die Erfindung wird sozusagen eine armierte Rasenfläche mit großer mechanischer Stabilität geschaffen, so daß sich in vorteilhafter Weise bisher nicht mögliche neue Anwendungsgebiete erschließen lassen. So ist nicht nur das Problem von stark befahrbaren Rasenflächen (Rand- und Mittelstreifen, Parkplätze, Wanderwege) grundsätzlich gelöst, die Erfindung befriedigt auch das eingangs erwähnte allgemeine Bedürfnis nach mehr Grünflächen mit den damit verbundenen positiven ökologischen Eigenschaften.

Die dem Gemenge gemäß der Erfindung beigemischten Zuschläge entstammen aus Schlacken, vorzugsweise Haldenschlacken, die als Abfallprodukt aus anderen Industriezweigen kostengünstig zur Verfügung steht. Daher besteht ein weiterer Vorteil der Erfindung darin, einen neuen Verwendungszweck für Haldenschlacken gefunden zu haben. Im übrigen können in zweckmäßiger Ausgestaltung der Erfindung die Zuschläge auch aus der Baustoffaufbereitung entnommen werden, d.h. Stoffe wie Bauschutt, Beton, bitumengebundene Materialien erhalten ebenfalls einen neuen Anwendungszweck. In diesem Zusammenhang ist hervorzuheben, daß die Zuschläge relativ preiswert sind, so daß die erfindungsgemäße Vegetationsschicht etwa im Vergleich mit den bekannten Gittersteinen einen erheblichen Kostenvorteil bietet.

Der bei der Erfindung beschrittene Weg kann nicht nur als neu, sondern auch als überraschende Maßnahme angesehen werden, denn der Stand der Technik gibt für die vorgeschlagene Lösung kein Vorbild. So finden sich im "Normenwerk des Landschaftbaues" (DIN 1820 und 18915—18920) keine Hinweise für eine verfestigte Vegetationsschicht. In DIN 18918 "Rasen" ist lediglich eine Rasenmischung für Parkplatzrasen erwähnt, ohne auf ein sich selbst verfestigendes mineralisches Gemenge einzugehen. Auch in DIN 18918 "Sicherungsbauweisen" sind entsprechende Hinweise nicht zu finden. Schließlich sei noch das Standartwerk des Landschaftsbaues "Taschenbuch für den Garten- und Landschaftsbau", Verlag Paul Parey-Berlin, 1981, genannt. Auch diesem Stand der Technik sind keine Hinweise für den erfindungsgemäßen Vorschlag zu entnehmen.

Da andererseits die durch die Erfindung geschaffene Vegetationsschicht zur Herstellung von befahrbaren Rasenflächen eine erhebliche ökologische, klimatologische, wassertechnische und verkehrstechnische Bedeutung besitzt, kann die Erfindung als entscheidender Beitrag in dieser Richtung eingestuft werden, zumal die neuartige Vegetationsschicht äußerst kostengünstig herstellbar ist.

Das Hauptanwendungsgebiet ist vor allem die Herstellung von befahrbaren — nunmehr sicheren — Randstreifen an Straßen und Autobahnen.

So werden in der Schrift "Verkehr und Umwelt in Nordrhein-Westfalen, I. Tausalz", Seite 108, des Ministers für Wirtschaft, Mittelstand und Verkehr des Landes Nordrhein-Westfalen seitliche Rasenflanken an den Straßen gefordert, um auch unter Tausalzeinfluß noch begrünbare und belastbare Seitenstreifen zu erhalten. Diese Forderung läßt sich mit der Erfindung problemlos realisieren.

Neue städtebauliche Konzepte sehen unter Entwicklung einer sogenannten "Bodenwertzahl" vor, möglichst wenig Funktionsflächen fest zu versiegeln (Steine, Beton usw.). Vielmehr besteht die Forderung, Stellflächen für Parkplätze mit Rasen zu fertigen, wobei das Ziel verfolgt wird, dadurch möglichst viel Niederschläge zu speichern sowie die Verdunstung zum Zwecke einer Klimaverbesserung zu erhöhen und das Kanalnetz durch Regenwasserabfluß zu entlasten. Auch hier bietet sich die Erfindung in optimaler Weise an. Schließlich ist ein zusätzliches Anwendungsgebiet bei landwirtschaftlichen Wegen und bei Wanderwegen gegeben.

Zweckmäßige Ausgestaltungen und Weiterbildungen der Erfindung sind in den Unteransprüchen angegeben und der Zeichnung zu entnehmen.

Nachfolgend wird die Erfindung anhand des in der Zeichnung dargestellten Ausführungsbeispiels näher erläutert.

Es zeigen:

Fig. 1 eine schematische Querschnittsansicht einer Vegetationsschicht aus mineralischem Gemenge, und

Fig. 2 eine schematische Querschnittsansicht einer Straße mit Randstreifen,

Fig. 3 eine weitere Querschnittsansicht einer Straße mit Randstreifen, und

Fig. 4 eine andere schematische Querschnittsansicht einer Vegetationsschicht.

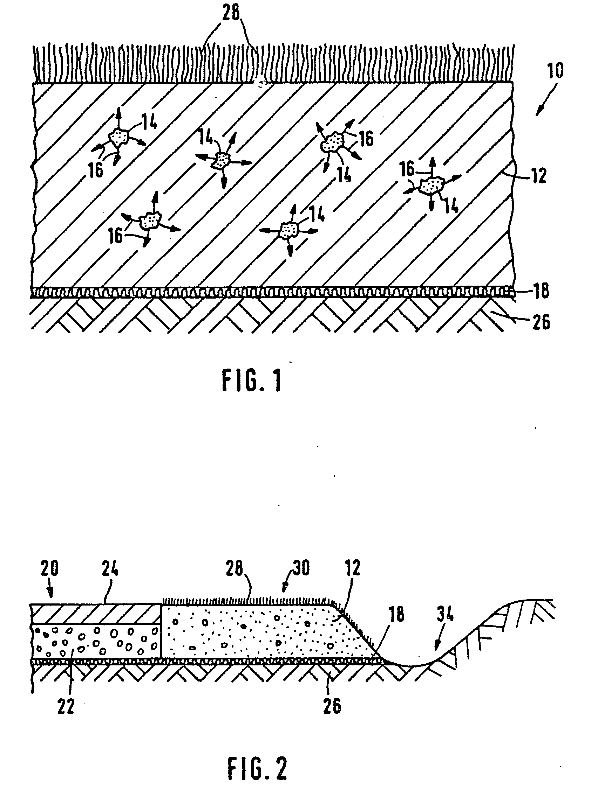

Die schematische Darstellung einer Vegetationsschicht 10 zeigt in Fig. 1, daß dem Gemenge 12 Zuschläge 14 beigemischt sind. Es sei darauf hingewiesen, daß die Zeichnung nur symbolisch zu verstehen ist, und daß hier nur besonders die Zuschläge 14 hervorgehoben sind.

Das Gemenge 12 enthält zunächst Gesteine, Sande, Humus, Boden und Hilfsstoffe wie Dünger usw. Diese Bestandteile sind in der Zeichnung nicht dargestellt.

Die dem Gemenge 12 beigemischten Zuschläge 14 geben unter der Einwirkung von Feuchtigkeit Salze und insbesondere Kalk ab, wodurch eine Gemengeverfestigung hervorgerufen wird. Diese Wirkung ist in Fig. 1 durch die Pfeile 16 angedeutet, welche unter anderem darstellen sollen, daß in Folge der Zuschläge 14 eine "Selbstverbakkung" stattfindet, die zu einer Selbstverstärkung des Gemenges 12 bzw. der Vegetationsschicht 10 führt. Gleichwohl bleibt die biologische Eigenschaft der Vegetationsschicht 10 zum Bewuchs mit einer Vegetation 28 erhalten.

Die neue Vegetationsschicht 10 besitzt also gerüstbildende Bestandteile, welche zur Verfestigung beitragen, und — nach wie vor — vegetationstechnische Bestandteile. Dabei ist eine zeichnerisch darstellbare Trennung dieser Bestandteile nicht möglich, vielmehr gehen die Bestandteile ineinander über.

Für die Zuschläge 14 läßt sich in vorteilhafter Weise Haldenschlacke verwenden, das ist ein Gemisch aus Hüttenreststoffen, wie Hochofenschlacke, Stahlwerkschlacke, enthaltend feuerfeste Materialien, Stäube, Schlämme, Bauschutte, Aschen, Kraftwerkschlacke, allgemeine Schottermaterialien, sowie Stahl- und Roheisenreste.

Es können auch Zuschläge 14 aus Recyclingmaterialien aus der Baustoffaufbereitung verwendet werden; hier kommen Beton, Bauschutt und bitumengebundene Materialien in Betracht.

Auch Zuschläge aus feinen und groben Humusbestandteilen, insbesondere grobstrukturierter Rindenhumus, sind im Rahmen der Erfindung anwendbar. Das Gemenge 12 besitzt dann ein durchgehendes Grobporengefüge, welches durch Rindenhumusbestandteile hervorgerufen wird.

Durch die von den Zuschlägen hervorgerufene laufende Kalkabgabe verfestigt sich das Gemenge 12 von selbst. Gleichwohl kann die Vegetationsschicht ihre ursächliche Aufgabe erfüllen, nämlich eine Begrünung durch Vegetation, z.B. Gräser und Kräutern, und damit eine dauerhafte belastbare Pflanzendecke zu bilden. Durch freiwerdende Kaliumchloridsalze in geringen Mengen wird in Vorteilhafter Weise eine Streßkonditionierung der Vegetation 28 bewirkt.

Die Vegetationsschicht 10 bzw. das Gemenge 12 ist mit einem Geotextil 18 unterlegt, welches sich in Fig. 1 zwischen dem Gemenge 12 und dem Unterboden 26 befindet.

In Fig. 2 ist ein bevorzugtes Anwendungsgebiet für die Vegetationsschicht 10 dargestellt, die hier einen Randstreifen (Bankett) 30 bei einem Straßenkörper 20 bildet. Der Straßenkörper 20 besteht in an sich bekannter Weise aus einem Unterbau 22 und einem Oberbau 24. Das Gemenge 12 ist auch hier wieder mit einem Geotextil 18 unterlegt, welches — zumindest teilweise — auch unterhalb des Straßenkörpers 20 verläuft. An den Randstreifen 30 schließt sich in der Darstellung ein Graben 34 an. Die Vegetation 28 erfüllt hier nicht nur die Funktion einer Rasendecke, vielmehr erlaubt das verfestigte Gemenge 12 ohne weiteres ein Befahren des Randstreifens 30 mit einem Fahrzeug, welches — anders als bei den bekannten Randstreifen und Vegetationsschichten — nicht einsinkt, da die neue Vegetationsschicht 10 erhebliche Belastungen aushält.

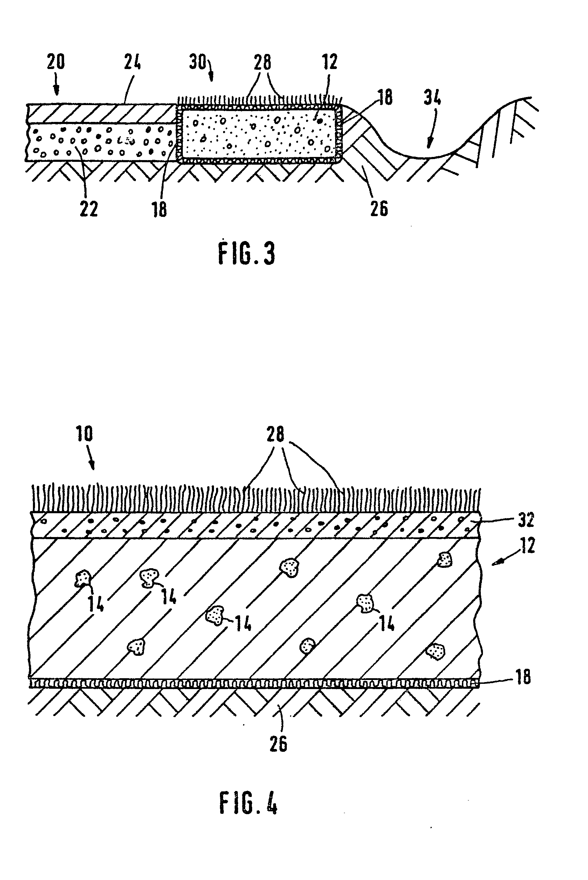

In Abweichung zur Darstellung gemäß Fig. 2 zeigt Fig. 3, daß das Geotextil das Gemenge 12 bzw. den Randstreifen 30 taschenförmig umgibt, also nicht nur waagerecht auf dem Unterboden 26, sondern an den beiden Seiten auch senkrecht und oben waagerecht verläuft.

In beiden Fällen wirkt das Geotextil 18 im Sinne einer Lastverteilung und der Erhöhung der Stabilität. Nach längerer Zeit kann das Geotextil 18 übrigens von Vegetation durchwurzelt werden.

Das mit Luft angefüllte Porenvolumen des neuartigen mineralischen Gemenges 12 sollte mindestens 15% betragen. Das gewünschte Porenvolumen läßt sich auch dadurch erzielen, daß dem Gemenge luftporenbildende geschäumte Kunststoffe, Blähtone oder Lava beigegeben wird. Neben der Bildung des Porenvolumens bewirken die genannten Bestandteile auch eine Speicherung von Feuchtigkeit.

Fig. 4 zeigt — ähnlich wie Fig. 1 — nochmals eine schematische Querschnittsansicht der neuen Vegetationsschicht 10. Mit der Bezugsziffer 32 ist hier eine obere dünne Schicht des Gemenges 12 bezeichnet, und in diese obere dünne Schicht 32 kann in zweckmäßiger Ausgestaltung der Erfindung bei der Herstellung des Gemenges bereits Saatgut von Gräsern und Kräutern eingemischt werden.

Von besonderem Vorteil ist es, wenn die Zuschläge 14 zumindest einen geringen Gehalt an Eisen besitzen. Der Eisengehalt wirkt sich nämlich äußerst positiv für Mikroorganismen aus, welche dadurch eine Besiedlungsfläche vorfinden, wodurch verhindert wird, daß die Mikroorganismen unter Umständen ausgeschwemmt werden.

Von der Straße her gelangen viele Schmutzstoffe auf den Randstreifen 30 (z.B. von Gummiabrieb, Oel usw.). Diese Schmutzstoffe können von den Mikroorganismen mineralisiert werden, was einen bedeutsamen Beitrag zur Umweltentlastung darstellt. Ein weiterer Vorteil besteht darin, daß durch den relativ großen pH-Wert von größer oder gleich "7", eine Kompensation des "Sauren Regens" ermöglicht wird.

Bezüglich des erwähnten Eisengehaltes ist noch anzumerken, daß sich dadurch nicht nur Vorteile hinsichtlich der Mikororganismen ergeben, vielmehr sind auch positive Auswirkungen auf die Vegetation 28 vorhande.

## Patentansprüche

1. Vegetationsschicht aus mineralischem Gemenge für eine begrünbare Verkehrsfläche (z.B. Parkplatz, Bankett), wobei das Gemenge Sande, Humus, Boden und Hilfsstoffe wie Dünger usw. enthält, dadurch gekennzeichnet, daß dem Gemenge (12) Zuschläge (14) beigemischt sind, welche unter der Einwirkung von Feuchtigkeit Salze und vor allem Kalk abgeben und eine Gemengeverfestigung bewirken, so daß eine verfestigte, befahrbare und dennoch dauerhaft begrünbare Vegetationsschicht gegeben ist.

2. Vegetationsschicht nach Anspruch 1, dadurch gekennzeichnet, daß sie Gips zum Zwecke einer Streusalzkompensation enthält.

3. Vegetationsschicht nach Anspruch 1, dadurch gekennzeichnet, daß die Zuschläge (14) durch Schlacke, insbesondere Haldenschlacke, gebildet sind.

4. Vegetationsschicht nach Anspruch 1, dadurch gekennzeichnet, daß sie Zuschläge (14) aus Recyclingmaterialien aus der Baustoffaufbereitung (Beton, Bauschutt, bitumengebundene Materialien) enthält.

5. Vegetationsschicht nach Anspruch 1, dadurch gekennzeichnet, daß die Zuschläge (14) bindige, tonmineralreiche Zuschläge aus Ober- und Unterboden sind.

6. Vegetationsschicht nach Anspruch 1, dadurch gekennzeichnet, daß sie Zuschläge aus feinen und groben Humusbestandteilen, insbesondere grobstrukturierten Rindenhumus enthält.

7. Vegetationsschicht nach einem der vorhergehenden Ansprüche 1—6, dadurch gekennzeichnet, daß das mineralische Gemenge (12) einen pH-Wert von gröβer oder gleich "7" aufweist.

8. Vegetationsschicht nach einem der vorhergehenden Ansprüche 1—7, dadurch gekennzeichnet, daß in die obere dünne Schicht (32) Saatgut von Gräsern und Kräutern eingemischt ist.

9. Vegetationsschicht nach einem der vorhergehenden Ansprüche 1—8, dadurch gekennzeichnet, daß sie mit einem Geotextil (18) unterlegt ist.

10. Vegetationsschicht nach einem der vorhergehenden Ansprüche 1—9, dadurch gekennzeichnet, daß in ihr Kaliumchloridsalze in geringen Mengen freigesetzt sind.

11. Vegetationsschicht nach einem der vorhergehenden Ansprüche 1—10, dadurch gekennzeichnet, daß das mit Luft gefüllte Porenvolumen des mineralischen Gemenges (12) mindestens 15% beträgt.

12. Vegetationsschicht nach Anspruch 11, dadurch gekennzeichnet, daß dem mineralischen Gemenge (12) zur Bildung des Porenvolumens luftporenbildende geschäumte Kunststoffe beigemischt sind.

13. Vegetationsschicht nach Anspruch 11, dadurch gekennzeichnet, daß dem mineralischen Gemenge (12) zur Bildung des Porenvolumens Blähtone beigemischt sind.

14. Vegetationsschicht nach Anspruch 11, dadurch gekennzeichnet, daß dem mineralischen Gemenge (12) zur Bildung des Porenvolumens Lava beigemischt ist.

## Revendications

1. Couche de végétation en mélange minéral pour zone de circulation gazonnable (par exemple: parc de stationnement, accotement), le nélange contenant du sable, de l'humus, la terre et des matières auxiliaires, tel que de l'engrais, etc., caractérisée en ce qu'au mélange (12) sont ajoutés des granulats (14) qui, sous l'influence de l'humidité, donnent des sels et avant tout de la chaux et provoquent une consolidation du mélange, de façon à avoir une couche de végétation compacte, carrossable et pourtant durablement gazonnable.

2. Couche de végétation selon la revendication 1, caractérisée en ce qu'elle contient du gypse dans le but de compenser le sel répandu.

3. Couche de végétation selon la revendication 1, caractérisée en ce que les granulats (14) sont formés par des scories, en particulier des scories de halde.

4. Couche de végétation selon la revendication 1, caractérisée en ce qu'elle contient des granulats (14) de matériaux de recyclage de préparation de matériaux de construction (béton, gravats, matériaux agglonérés à du bitume).

5. Couche de végétation selon la revendication 1, caractérisée en ce que les granulats (14) sont des granulats cohérents du règne minéral argileux du sol superficiel et du sous-sol.

6. Couche de végétation selon la revendication 1, caractérisée en ce qu'elle contient des granulats de constituants d'humus fins et grossiers, en particulier de l'humus d'écorse à structure grossière.

7. Couche de végétation selon l'une des revendications précédentes 1 à 6, caractérisée en ce que le mélange minéral (12) présente une valeur de pH plus grande ou égale à "7".

8. Couche de végétation selon l'une des revendications précédentes 1 à 7, caractérisée en ce que, dans la couche mince superficielle (32) sont-introduites des semences de gazon et d'herbes.

9. Couche de végétation selon l'une des revendications precedentes 1 à 8, caractérisée en ce que, sous elle, est posée un géotextile (18).

10. Couche de végétation selon l'une des revendications précédentes 1 à 9, caractérisée en ce que, des sels de chlorure de potassium y sont libérés en petites quantités.

11. Couche de végétation selon l'une des revendications précédentes 1 à 10, caractérisée en ce que le volume poreux rempli d'air du mélange minéral(12) se monte à au moins 15%.

12. Couche de végétation selon la revendication 11, caractérisée en ce qu'au mélange minéral (12), est ajouté du plastique en mousse créant des pores aérés pour la formation du volume poreux.

13. Couche de végétation selon la revendication 11, caractérisée en ce qu'au mélange minéral (12) est ajoutée delargile expansée pour la formation du volume poreux.

14. Couche de végétation selon la revendication 11, caractérisée en ce qu'au mélange minéral (12), est ajoutée de la lave pour la formation du volume poreux.

## Claims

1. Vegetation layer, consisting of a mineral mixture for a traffic area which can be planted (e.g. parking area, verge or slope), wherein the mixture contains sand, humus, soil and auxiliary substances such as fertilizer etc., characterized in that admixtures (14) are mixed into the mixture (12), which admixtures, under the action of humidity, produce salt and especially lime and lead to a strengthening of the mixture, so that a strengthened vegetation layer, over which vehicles may travel but which nevertheless can be permanently planted, results.

2. Vegetation layer according to Claim 1, characterized in that it contains gypsum for the purpose of compensating deicing salt.

3. Vegetation layer according to Claim 1, characterized in that the admixtures (14) are formed of slag, especially dump slag.

4. Vegetation layer according to Claim 1, characterized in that it contains admixtures (14) of recycled materials from building materials preparation (concrete, rubble, bitumen-bound materials).

5. Vegetation layer according to Claim 1, characterized in that the admixtures (14) are cohesive admixtures, rich in clay minerals, of topsoil and subsoil.

6. Vegetation layer according to Claim 1, characterized in that it contains admixtures of fine and coarse humus constituents, especially coarse-structured bark humus.

7. Vegetation layer according to one of the preceding Claims 1 to 6, characterized in that the mineral mixture (12) has a pH value greater than or equal to 7.

8. Vegetation layer according to one of the preceding Claims 1 to 7, characterized in that seeds of grasses and herbs are mixed into the upper thin layer (32).

9. Vegetation layer according to one of the preceding Claims 1 to 8, characterized in that it is underlain by a geotextile (18).

10. Vegetation layer according to one of the preceding Claims 1 to 9, characterized in that potassium chloride salts are released in it in small quantities.

11. Vegetation layer according to one of the preceding Claims 1 to 10, characterized in that the pore volume of the mineral mixture (12) that is filled with air amounts to at least 15%.

12. Vegetation layer according to Claim 11, characterized in that air-entraining, foamed plastics materials are admixed into the mineral mixture (12) for the purpose of forming the pore volume.

13. Vegetation layer according to Claim 11, characterized in that expanded clays are admixed to the mineral mixture (12) for the purpose of forming the pore volume.

14. Vegetation layer according to Claim 11, characterized in that lava is admixed to the mineral mixture (12) for the purpose of forming the pore volume.

FIG. 1

FIG. 2

FIG. 3

FIG. 4

2